# EUROPÄISCHE PATENTSCHRIFT

(11) **EP 3 463 845 B1**
(45) Veröffentlichungstag und Bekanntmachung des Hinweises auf die Patenterteilung: **29.04.2020**
(21) Anmeldenummer: 17727197.0
(22) Anmeldetag: 30.05.2017
(51) Int. Cl.: B31B 50/25, B31F 1/00, B31F 1/08, B26D 3/08

(54) **KOMBINIERTES PRÄGE- UND RITZ-/SCHNEIDWERKZEUG**
COMBINED CREASING AND SLITTING DEVICE
OUTIL COMBINÉ DE RAINAGE ET D'ENTAILLAGE/DE COUPE

(30) Priorität: 30.05.2016 DE 202016102849 U
(43) Veröffentlichungstag der Anmeldung: 10.04.2019
(73) Patentinhaber: Essmann + Schaefer GmbH + Co. KG, 42369 Wuppertal (DE)
(72) Erfinder: KÄMMERLING-ESSMANN, Daniel, 42369 Wuppertal (DE)
(74) Vertreter: Patent- und Rechtsanwälte Dr. Solf & Zapf
(86) Internationale Anmeldenummer: PCT/EP2017/063011
(87) Internationale Veröffentlichungsnummer: WO 2017/207554

(56) Entgegenhaltungen:
- WO-A1-02/47888
- WO-A1-97/36739
- DE-C1- 19 838 514
- DE-U1-202011 051 257
- JP-A- H03 143 618

## Beschreibung

Die vorliegende Erfindung betrifft ein Werkzeug zum zumindest Prägen von linienförmigen Faltrillen und zum Einschneiden von faltbaren Materialien, wie Pappe, Kartonagen, Feinkartonagen, Kunststoff-Folien oder Wellpappe, bestehend aus einem flachen, streifenförmigen Basiskörper, wobei der Basiskörper einen Kopfbereich aufweist, in dem an einer Längskante eine stumpfe Prägekante zur Erzeugung einer Faltrille im Material und ein Ansatz mit einer Schneidkante zur Erzeugung einer Schnitt- oder Ritzlinie im Material ausgebildet sind, und wobei der Basiskörper einen Klingenbereich mit einem Fußbereich aufweist, in dem an einer dem Kopfbereich gegenüberliegenden Längskante ein Rücken zur Anlage in einem Werkzeugträger ausgebildet ist, wobei der Kopfbereich des Basiskörpers breiter ausgebildet ist als sein Klingenbereich, wobei im Kopfbereich zwei Ansätze mit parallel zueinander verlaufenden Schneid-, Ritz- und/oder Stauchkanten angeordnet sind, zwischen denen sich die stumpfe Prägekante befindet, wobei der Basiskörper zumindest zweiteilig ausgebildet ist.

Ein Rillwerkzeug, jedoch ohne Schneidkante, ist aus dem deutschen Gebrauchsmuster DE 296 05 079 U1 bekannt, wobei die stumpfe Prägekante dazu führt, dass bei der Anwendung des bekannten Rillwerkzeugs das zu prägende und im weiteren Verlauf zu faltende Material nicht angeritzt oder geschnitten, sondern nur im Wesentlichen linienförmig eingedrückt wird. In dem Gebrauchsmuster werden Einsatzgebiet und Problematik von Rillwerkzeugen zum Prägen von linienförmigen Faltrillen beschrieben. Derartige Rillwerkzeuge, sogenannte "Rill-Linien", werden vor allem in der Verpackungsindustrie, insbesondere der Wellpappen- und Kartonagenindustrie, dazu verwendet, bei zu faltenden Materialien Faltrillen bzw. sogenannte "Rillkanäle" zu prägen, indem die relativ stumpfe Prägekante auf das Material gepresst wird.

Speziell für (Fein-)Kartonagen und auch für Kunststoff-Folien ist es dabei wichtig, dass die Prägekante relativ schmal und dünn ausgebildet ist, damit sie sich genügend in das zu faltende Material eindrücken kann. Andererseits darf die Prägekante aber auch nicht zu dünn sein, da ansonsten die Gefahr besteht, dass es zu Beschädigungen des Materials, wie Rissbildungen und dergleichen, kommt. Daher ist bei relativ dünnen und damit harten, unnachgiebigen Faltmaterialien das Prägen zumeist nur im Zusammenwirken mit einem speziellen Matrizenstreifen möglich. Dieser Matrizenstreifen wird auf einer Unterlage befestigt und bildet eine kanalartige Vertiefung, in die das Faltmaterial beim Prägevorgang durch die Prägekante des Rillwerkzeuges hineingedrückt wird. Hierzu ist eine sehr genaue Ausrichtung der Matrizenstreifen in Relation zu den Prägekanten erforderlich. Beim Prägen kommt es auf kleinem Raum zu einer Konzentration der Prägekräfte und damit zu erheblichen Komprimationspannungen.

Bei dickeren und weicheren Faltmaterialien müssen dagegen, um eine gute Faltbarkeit ohne Beschädigungen des Materials zu erreichen, die Prägekanten in der Regel relativ breit ausgebildet sein. Auch hier treten Spannungen auf, und zwar auf der einen Seite des Materials Druck- und auf der anderen Seite Zugspannungen, wobei deren Werte erheblich (mehr als bei dünnen Materialien) voneinander differieren können.

Es ist auch bekannt, dass durch den verstärkten Einsatz von Recycling-Materialien häufig Schwankungen in der Qualität des Faltmaterials auftreten. Dadurch kann es vorkommen, dass - obwohl das Rillwerkzeug hinsichtlich seiner geometrischen Abmessungen zunächst genau auf das zu faltende Material abgestimmt war - Risse oder Abplatzungen in der Pappe, Wellpappe, dem Karton oder der Kunststoff-Folie auftreten.

Aus der DE 198 38 514 C1 ist ein Werkzeug bekannt, durch das auch bei Qualitätsschwankungen des Faltmaterials eine gleichbleibend hohe Qualität der Faltrillen gewährleistet und die Ausbildung von Rissen oder Abplatzungen beim Prägen - unabhängig von der Breite der Prägekante - wirksam unterbunden werden kann. Bei diesem Werkzeug - einer sogenannten "Rill- und Ritzlinie" - ist die Prägekante mit einer Schneidkante kombiniert, wobei aufgrund des Schnittes beim Falten unabhängig von der Materialbeschaffenheit die Druckspannungen in der Faltrille erheblich reduziert werden, wodurch die Faltbarkeit der zu verarbeitenden Materialien bedeutend verbessert wird. Dabei ist es auch von Vorteil, dass die beiden Arbeitsgänge Ritzen und Rillen gleichzeitig durchführbar sind. In einer speziellen Ausbildung gemäß der DE 198 38 514 C1 ist die Prägekante über die Länge des streifenförmigen Basiskörpers durchgehend ausgebildet, die Schneidkante weist über die Länge des streifenförmigen Basiskörpers jedoch Unterbrechungen auf. Im Bereich dieser Unterbrechungen besitzt die Prägekante ihre - im Querschnitt gesehen - konvex gerundete Form, die insbesondere kreisbogenförmig, vorzugsweise halbkreisförmig, sein kann.

Wenngleich bei derartigen Werkzeugen von einer "Schneidkante" bzw. von einem "Schneidwerkzeug" die Rede ist, so versteht der Fachmann dabei unter "Schneiden" jedoch keine vollständige Durchtrennung - also kein Durchschneiden, wie bei einem Stanzen - des zu bearbeitenden Gutes, sondern nur ein Ritzen - also ein Einschneiden, welches bewirkt, dass das zu bearbeitende Material über seine Dicke hinweg nur in einem Teilbereich getrennt wird. Unter "Schneiden"ist folglich im Rahmen der vorliegenden Anmeldung bzw. Erfindung keine komplette Materialtrennung, sondern nur ein "Ritzen" zu verstehen. Ein vollständiges Durchtrennen des Materials, wie dies beispielsweise in der DE 10 2014 102 552 B4 beschrieben ist, soll vermieden werden.

Unter "Prägen" wird im Rahmen der vorliegenden Erfindung eine nach Einwirkung und anschließendem Entfernen der Prägekante bleibende Dickendeformation des Materials verstanden. Mit zunehmender Deformation der Dicke des geprägten Gutes tritt dabei ein zunehmender Widerstand gegen eine weitere Druckeinwirkung im Bereich der erzeugten Faltrille ein. Die Faltbarkeit - also ein Biegen - des Materials wird jedoch durch die erzeugte Präge- bzw Faltrille begünstigt.

In der EP 1 238 793 B1 ist ein kombiniertes Präge- und Ritz-/Schneidwerkzeug beschrieben, welches eine Weiterentwicklung gegenüber der DE 198 38 514 C1 darstellt. Dieses kombinierte Werkzeug, welches zum Prägen von linienförmigen Faltrillen und zum Schneiden von faltbaren Materialien, wie Pappe, Kartonagen, Feinkartonagen, Kunststoff-Folien oder Wellpappe eingesetzt werden kann, besteht aus einem flachen, streifenförmigen Basiskörper mit einer an einer Längskante angeordneten stumpfen Prägekante, an der ein in seinem Fußbereich eine Breite aufweisender Schneidansatz mit einer Schneidkante derart angeordnet ist, dass beim Prägevorgang das Material im Bereich der Faltrille, bezogen auf seine Dicke, zumindest eingeschnitten wird, wobei die Prägekante über die Länge des streifenförmigen Basiskörpers durchgehend ausgebildet ist und die Schneidkante über die Länge des streifenförmigen Basiskörpers Unterbrechungen aufweist. Die Weiterentwicklung gegenüber der DE 198 38 514 C1 besteht darin, dass die Prägekante im Bereich der Unterbrechungen über eine Breite, die der Breite des Fußbereiches des Schneidansatzes entspricht, als ebene Fläche ausgebildet ist. Dieser Weiterentwicklung lag die überraschende Erkenntnis zugrunde, dass trotz einer Abflachung in der angegebenen Breite durch die Prägekante eine gleichmäßig gute Rillung erzielt werden kann.

Die vorstehend beschriebenen kombinierten Werkzeuge haben sich grundsätzlich in der Praxis bewährt, jedoch hat sich gezeigt, dass hin und wieder bei der Bearbeitung von insbesondere Wellpappe, aber auch teilweise schon bei der Bearbeitung von dünnerer Pappe bzw. von dickerem Karton dennoch Probleme hinsichtlich der Qualität der Faltrillen auftraten. Papiere, Kartons und Pappen unterscheiden sich ja bekanntermaßen durch ihr spezifisches Flächengewicht, welches bei Seidenpapier beispielsweise bei 8 g/m² liegt. Es folgen Zeitungspapier mit 50 g/m², Schreibmaschinenpapier mit 70 g/m², Zeichenpapier mit 130 g/m², Postkartenkarton mit 170 g/m², Glückwunschkartenkarton mit 220 g/m², Aktendeckelkarton mit 250 g/m² bis zur Vollpappe, die z. B. für Ordnerdeckel eingesetzt wird, mit 600 g/m². Bei Wellpappe kann das spezifische Flächengewicht in weiten Grenzen, insbesondere durch die Anzahl der Wellen- und Decklagen sowie die Wellenteilung und -höhe, schwanken. In der Regel sind sowohl die Dicke, als auch das spezifische Flächengewicht von Wellpappe größer als die von Papier und Karton. Die genannten Probleme können z. B. beginnend bei einem Flächengewicht im Bereich von 180 g/m² bis 200 g/m² auftreten.

In der EP 2 228 207 B1 ist ein bekanntes Verfahren zur Herstellung von Biegelinien in einem Materialbogen, insbesondere in einem Kartonbogen, beschrieben, bei dem in einer Oberfläche des Materialbogens Rillnuten ausgebildet werden, die seitlich durch zwei Nutwände begrenzt sind. Hierbei ist vorgesehen, dass in der anderen, der zu prägenden Oberfläche gegenüber liegenden Oberfläche des Materialbogens zwei Ritzungen jeweils seitlich außerhalb einer Nutwand ausgebildet werden, die parallel zur Rillnut verlaufen. Die dazugehörige bekannte Vorrichtung weist eine Trägerplatte auf, von deren Unterseite sich wenigstens eine Rilllinie erstreckt, die an ihrem der Trägerplatte abgewandten Ende eine Rillkante aufweist. Des Weiteren weist diese Vorrichtung auf der der Trägerplatte gegenüber liegenden Seite eine Stanz-Rillplatte auf, auf der der Rilllinie gegenüberliegend ein Rillkanal vorgesehen ist, wobei die Seiteninnenwände des Rillkanals nach oben und schräg nach außen verlaufen und jeweils in einer Spitzenkante enden, wobei die Spitzenkanten jeweils bezüglich der Rilllinie nach außen versetzt parallel zu dieser verlaufen. An der Rilllinie sind den Spitzenkanten gegenüberliegend Druckflächen vorgesehen, die parallel zu den Spitzenkanten verlaufen und bezüglich der Rillkante in Richtung der Trägerplatte versetzt sind. Es werden dabei bei der Materialbearbeitung die Funktionen "Rillen" und "Ritzen" von zwei unterschiedlichen korrespondierende Werkzeugteilen - Trägerplatte mit Rillkante und Stanz-Rillplatte mit Rillkanal - erfüllt, was bei jeder Bearbeitung des Gutes nachteiligerweise eine hochgenaue Ausrichtung dieser beiden Werkzeugteile zueinander erfordert.

Das deutsche Gebrauchsmuster DE 20 2011 051 257 U1 beschreibt eine Einrichtung zum Rillen von Wellpappe oder Karton, mit einem an einem Werkzeugoberteil befestigbaren, streifenförmigen Rillwerkzeug, das zum Ausbilden einer Rillung gegen die im Bereich eines Werkzeugunterteil angeordnete Wellpappe oder den Karton verfahrbar ist, wobei das Rillwerkzeug einen Formkörper aufweist, der auf der der Wellpappe oder dem Karton zugewandten Seite wenigstens zwei zueinander parallel angeordnete Formgeber aufweist. Bei dieser Einrichtung handelt es sich um ein Werkzeug der eingangs genannten Art.

Der vorliegenden Erfindung liegt die Aufgabe zugrunde, ein Werkzeug der eingangs genannten Art derart zu verbessern, dass es auf einfache Weise in technologisch wirtschaftlicher Weise herstellbar ist und bei hoher Funktionalität in Bereichen mit hohem spezifischen Flächengewicht des zu prägenden Gutes eine verbesserte Qualität der Faltlinien gewährleistet.

Gemäß der Erfindung wird diese Aufgabe dadurch gelöst, dass der Basiskörper jeweils aus zwei symmetrisch zueinander ausgebildeten Werkzeughälften mit jeweils einer Kopfbereichhälfte und einer Klingenbereichhälfte besteht..

Die Erfindung macht es sich einerseits zunutze, dass es bei Materialien mit höherem Flächengewicht - sei es bei verrundeter, sei es bei ebener Prägekante - beim Prägen zu einer Durchbiegung des Materials kommt, wobei die dem Werkzeug zugewandte Seite des Materials gestaucht und die dem Werkzeug abgewandte Seite gedehnt wird. Dadurch kann in dem zu prägenden Gut eine Kräfteverteilung entstehen, die sich bei Vorhandensein von nur einer Schneidkante ungünstig auf das Eindringen der Schneidkante in das Gut auswirken kann, weil die Schneidkante an der maximal gestauchten Stelle eindringen muss. Durch die Präsenz von zwei parallel zueinander verlaufenden Schneidkanten mit dazwischen liegender Prägekante kann diese Erscheinung vorteilhafterweise wirkungsvoll unterbunden werden, da durch das doppelte Einschneiden auf beiden Seiten der zu erzeugenden Faltrille eine andere, verbesserte Kräfteverteilung im Gut und auch ein anderes, verbessertes Wölbungsverhalten des Gutes beim Prägen eingestellt werden kann.

Andererseits entsteht erfindungsgemäß aus jeweils zwei komplementären Werkzeughälften durch eine gegenseitige Verbindung oder zumindest ein Aneinanderlegen jeweils ein Basiskörper als Ganzes, wobei sich darin die jeweils halben Kopfbereiche mit ihren jeweils halben Dicken und halben Prägekanten sowie die jeweils halben Klingenbereiche mit ihren halben Dicken zum Basiskörper mit seiner Gesamtdicke vereinigen. Unter fertigungstechnischen Aspekten ist dies vorteilhaft, weil trotz des notwendigen zusätzlichen Verfahrensschrittes des Zusammenfügens der Einzelteile durch die jeweils uniform mögliche Behandlung der Einzelteile und dann einen möglichen Verzicht auf eine spanende Bearbeitung, um den Dickenunterschied von Kopfbereich und Klingenbereich herzustellen, die Gesamtfertigung dennoch weniger Aufwand erfordert, also wirtschaftlicher wird.

Bei der Verwendung des erfindungsgemäßen Werkzeugs wird ein faltbares Material, wie Pappe, Karton, Feinkarton, Kunststoff-Folie oder Wellpappe, auf eine ebenflächige Unterlage gebracht und dann durch das Werkzeug oberseitig mit einem, insbesondere senkrecht zur Unterlage wirkenden, Druck beaufschlagt, wobei mittels der stumpfen Prägekante eine Faltrille erzeugt und mittels der an den beiden Ansätzen befindlichen, parallel zueinander verlaufenden Schneidkanten ein Einschneiden, eine Ritzung und/oder eine Stauchung des Materials erfolgt.

Weitere vorteilhafte Ausgestaltungsmerkmale der Erfindung sind in den abhängigen Ansprüchen sowie auch in der anschließenden Beschreibung enthalten.

Anhand einiger, in den Zeichnungen veranschaulichter, vorteilhafter Ausführungsbeispiele soll die Erfindung im Folgenden weitergehend erläutert werden. Es zeigen:
- Fig. 1: einen vergrößerten Querschnitt eines kombinierten Präge- und Ritz-/Schneidwerkzeugs in einer ersten Ausführungsform, wobei das Werkzeug in einer Montagestellung in einem Werkzeughalter dargestellt ist,
- Fig. 2: eine Ausschnittvergrößerung des Bereiches II gemäß Fig. 1,
- Fig. 2a: eine Darstellung wie in Fig. 2, wobei jedoch zusätzlich das zu prägende und zu ritzende Material gezeigt ist,
- Fig. 3: in verkleinertem Maßstab, eine perspektivische Aufsicht auf einen Ausschnitt auf die in Fig. 1 dargestellte Werkzeugausführung,
- Fig. 4: die in den Fig. 1 bis 3 dargestellte Ausführungsform des Werkzeuges in der Draufsicht,
- Fig. 5: in analoger Darstellung zu Fig. 1, einen vergrößerten Querschnitt einer Werkzeughälfte eines erfindungsgemäßen kombinierten Präge- und Ritz-/Schneidwerkzeugs als eine zweite Ausführungsform,
- Fig. 6: eine Ausschnittvergrößerung des Bereiches VI gemäß Fig. 5,
- Fig. 7: in analoger Darstellung zu Fig. 3, eine perspektivische Aufsicht auf einen Ausschnitt der in Fig. 5 dargestellten Werkzeughälfte,
- Fig. 8: die in den Fig. 5 bis 7 dargestellte Ausführungsform der Werkzeughälfte der zweiten Ausführung des erfindungsgemäßen Werkzeuges in einer perspektivischen Aufsicht,
- Fig. 9 bis Fig. 11: in analoger Darstellung zu Fig. 5 bis Fig. 7 die zweite Ausführung, also die des erfindungsgemäßen Werkzeuges als Ganzes,
- Fig. 12 und Fig. 13: in analoger Darstellung zu Fig. 5 und zu Fig. 9 eine dritte Ausführung, und zwar des erfindungsgemäßen Werkzeuges als Werkzeughälfte (Fig. 12) und als Ganzes (Fig. 13),
- Fig. 14 und Fig. 15: jeweils eine perspektivische Aufsicht auf die Werkzeughälfte gemäß Fig. 12 und das Werkzeug als Ganzes gemäß Fig. 13,
- Fig. 16 bis Fig. 21: sechs weitere mögliche Ausführungsformen des erfindungsgemäßen Werkzeuges in einer Darstellung ähnlich wie in Fig. 2, und
- Fig. 22 bis Fig. 28: jeweils Querschnittsdarstellungen eines Ausschnitts aus dem Basiskörper des erfindungsgemäßen Werkzeuges in noch sieben weiteren Ausführungsformen.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

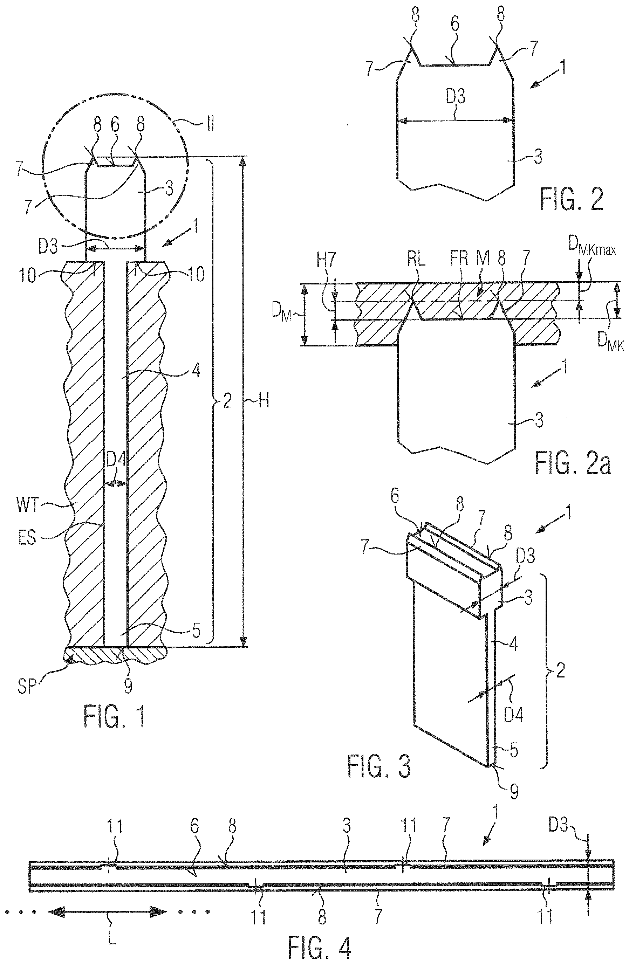

Ein kombiniertes Präge- und Ritz-/Schneidwerkzeug 1, welches insbesondere zum Prägen von linienförmigen Faltrillen FR (nur in Fig. 2a) und zum Einschneiden von faltbaren Materialien M, wie Pappe, Kartonagen, Feinkartonagen, Kunststoff-Folien oder Wellpappe, - also zur Erzeugung von Ritzlinien RL (nur in Fig. 2a) - eingesetzt werden kann, besteht aus einem flachen, streifenförmigen Basiskörper 2, wobei der Basiskörper 2 einen Kopfbereich 3 und einen Klingenbereich 4 mit einem Fußbereich 5 aufweist,

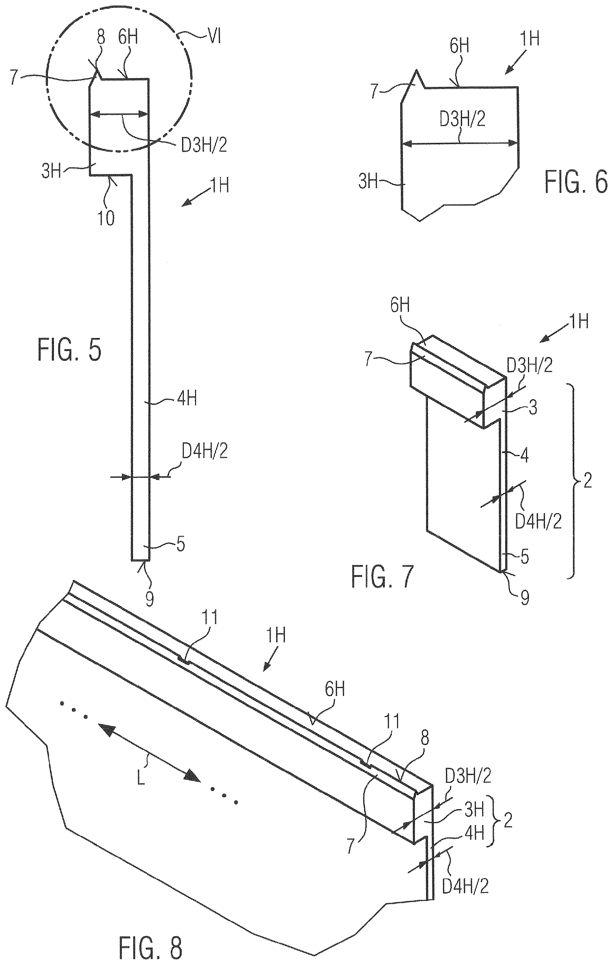

Der Basiskörper 2 kann beispielsweise - wie in der ersten (nicht erfindungsgemäßen) Ausführung gemäß Fig. 1 bis 4 gezeigt - einstückig aus einem Bandstahl, insbesondere einem Federbandstahl, bestehen. Diese nicht erfindungsgemäße Ausführung kann jedoch dadurch, dass der Basiskörper 2 - wie es in Fig. 5 bis 8 dargestellt ist - jeweils aus zwei symmetrisch zueinander ausgebildeten Werkzeughälften 1H mit jeweils einer Kopfbereichhälfte 3H und einer Klingenbereichhälfte 4H zusammengesetzt wird, leicht erfindungsgemäß ausgestaltet werden. Eine solche Ausbildung ist nachfolgend immer inkludiert, wenn das Atrribut "erfindungsgemäß" verwendet wird.

In dem Kopfbereich 3 ist an einer Längskante des Basiskörpers 2 eine stumpfe Prägekante 6 zur Erzeugung einer Faltrille im zu prägenden Material und beidseitig der Prägekante 6 jeweils ein Ansatz 7 mit einer Schneidkante 8 zur Erzeugung einer Schnittlinie im Material ausgebildet. Beim Einsatz des erfindungsgemäßen Werkzeugs kann auch durch beide Schneidkanten 8, insbesondere jeweils in einem definierten Bereich des zu prägenden Materials, eine gezielte Zerstörung, also ein Schnitt mit bis zu vollständiger, bevorzugt jedoch zumindest teilweiser, Materialdurchtrennung herbeigeführt werden. Dadurch wird das Prägeverhalten des Materials verbessert. Dabei muss die zu erzeugende Faltrille nicht in geometrisch genaue Übereinstimmung mit einem vorher in das Material eingebrachten Schnitt gebracht werden oder umgekehrt.

Für eine hohe Verschleißfestigkeit der Schneidkanten 8 ist es dabei günstig, wenn der Kopfbereich 3, bevorzugt nur dessen Ansatz 7, zumindest aber der Ansatz 7 im Bereich der Schneidkante 8, gehärtet und angelassen ist. Hierbei ist es vorteilhaft, wenn die Härte des Ansatzes 7 zumindest im Bereich der Schneidkante 8 insbesondere mindestens 40 HRC, z. B. 50 HRC, beträgt, während der Basiskörper 2 im Klingenbereich 4 bevorzugt eine Grundhärte von 25 HRC bis 45 HRC aufweisen kann. Als besonders geeignetes Härteverfahren kommt dabei vorzugsweise eine Induktionshärtung in Frage. Der anschließende Anlassvorgang kann danach zur Einstellung eines geeigneten Verhältnisses von Härte zu Zähigkeit vorzugsweise bei einer Temperatur von 250 °C bis 500 °C, durchgeführt werden. Die Härte (bestimmt nach DIN 1544 und DIN 17222) liegt in diesem Fall im Bereich von etwa 900 N/mm² bis 2.200 N/mm². Es ist auch möglich, dass der gesamte Basiskörper 2 gehärtet und angelassen ist, so dass der Kopfbereich 3 mit dem Ansatz 7 und der Klingenbereich 4 die gleiche Härte aufweisen.

Der streifenförmige Basiskörper 2 kann mit Vorteil im Kopfbereich 3 eine Dicke D3 im Bereich von 0,5 mm bis 5,0 mm, vorzugsweise von etwa 0,7 mm bis 1,5 mm, aufweisen. Die Dicke D4 im Klingenbereich 4 kann dabei in einem Bereich von einem bis drei Viertel der Dicke D3 im Kopfbereich liegen. Der Basiskörper 2 kann dadurch gut in entsprechende Aufnahmen von Halteplatten oder Prägezylindern als Werkzeugträger WT eingesetzt und darin befestigt werden, wie dies Fig. 1 zeigt. In dem Fußbereich 5 des Klingenbereichs 4, der sich an einer dem Kopfbereich 3 gegenüberliegenden Längskante des Basiskörpers 2 befindet, ist dazu ein Rücken 9 ausgebildet. Der Rücken 9 kann auf einer einen Aufnahmeschlitz ES des Werkzeugträgers WT rückseitig überdeckenden Stahlplatte SP zur Anlage kommen und sich dort abstützen.

Außerdem können mit Vorteil die unterseitig des Kopfbereiches 3 liegenden Flächen 10, welche sich aus der Differenz der Dicke D3 des Kopfbereiches und der Dicke D4 des Klingenbereiches 4 ergeben, als Anlageflächen für den Werkzeugträger WT an dessen Oberfläche dienen, wodurch mit Vorteil die Flächenpressung zwischen Werkzeug 1 und Werkzeugträger WT gemindert wird.

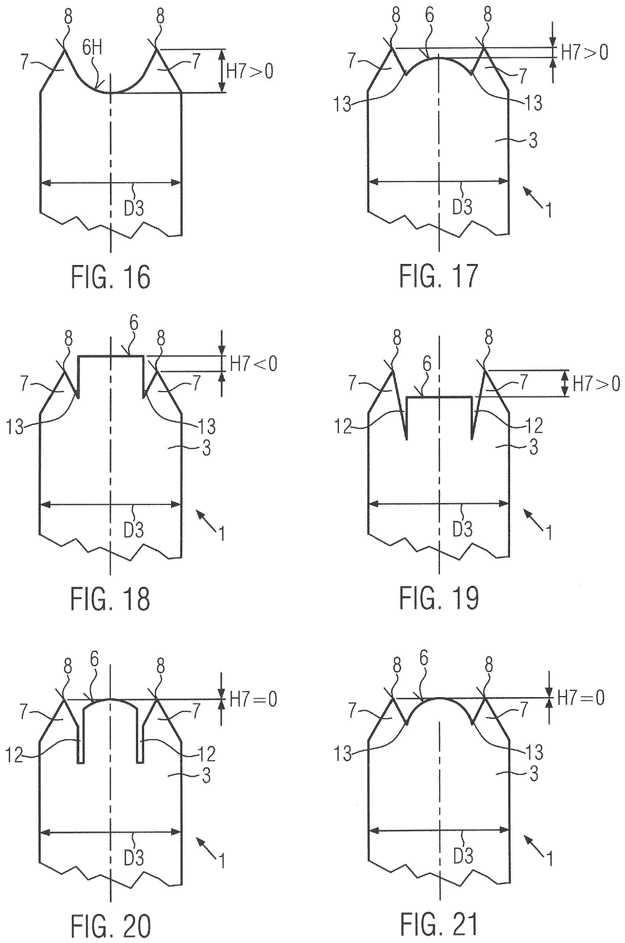

Der Ansatz 7 kann beidseitig von konkav, konvex oder eben ausgebildeten, nicht näher bezeichneten Flanken begrenzt sein und kann durch eine geeignete Dimensionierung in optimaler Weise an das zu prägende Material angepasst werden. So kann der Abstand der Flanken des Ansatzes 7 (Flankenfußbreite FB in Fig. 2) - je nach den Festigkeitseigenschaften des erfindungsgemäßen Werkzeuges 1 sowie nach Art und Abmessungen des faltbaren Materials - in einem unmittelbar an der Prägekante 6 befindlichen Fußbereich des Ansatzes 7 etwa 0,05 mm bis 1,5 mm groß sein, wodurch bei hoher mechanischer Stabilität des Ansatzes 7 eine ausgezeichnete Funktionalität des erfindungsgemäßen Werkzeugs 1 erreicht wird. Die Flanken 6 des Ansatzes 7 können geschliffen, gefräst, chemisch abgetragen (geätzt), erodiert, aber in fertigungstechnisch vorteilhafter Weise insbesondere geschabt sein, damit eine scharfe Schneidkante 8 entsteht. Sie können eben, konvex oder konkav ausgebildet sein. Auch kann die Schneidkante 8 zur Erzielung einer mehr prägenden Wirkung oberseitig bewusst mit einem Radius versehen sein, wie dies in Fig. 21 exemplarisch dargestellt ist.

Die Höhe H7 des Ansatzes 7 ist etwa gleich der Dicke des zu prägenden faltbaren Materials, wenn dieses vollständig durchtrennt wird, und zwar bezogen auf einen dickenkomprimierten Zustand des faltbaren Materials, der sich bei den beim Prägen auftretenden Kräften beidseitig der stumpfen Prägekante 6 einstellt. Eine vollständige Durchtrennung des Materials stellt jedoch keinen bestimmungsgemäßen Werkzeugeinsatz dar, da das Werkzeug 1 zum Prägen dient, dem eine Materialdurchtrennung konträr entgegenstünde. Bei kleinerer Höhe H7 wird das mit dem erfindungsgemäßen Werkzeug zu prägende Material nur geritzt.

Unter Berücksichtigung der Dickenabmessungen und der Kompressibilität der üblichen faltbaren Materialien ergibt sich dabei ein Vorzugsbereich für die Höhe H7 des Ansatzes 7 von 0,05 mm bis 1,5 mm.

Die Komprimierbarkeit, insbesondere auch die maximale Komprimierbarkeit, des zu verarbeitenden Materials kann vor dem Prägen ermittelt und dann ein erfindungsgemäßes Werkzeug 1 mit entsprechender Höhe H7 des Ansatzes 7 (siehe Fig. 2 sowie Fig. 16 bis 21) ausgewählt werden.

Wenn zum Prägen ein Werkzeug 1 ausgewählt wird, bei dem die Höhe H7 des Ansatzes 7 kleiner ist als die Dicke D_{MKmax} des maximal komprimierten Materials M, (durch eine Strichlinie in Fig. 2a angedeutet) kann es bei der Erzeugung der Ritzlinie RL in keinem Fall zu einer Durchtrennung des Materials M kommen. Dabei muss allerdings beim Prägen durch die stumpfe Prägekante 6 in der Faltrille FR ausgehend von der ursprünglichen Materialdicke D_{M} nicht zwangsläufig die maximal mögliche Komprimation eingestellt werden, sondern es genügt in der Regel einen Druck aufzubringen, der geringer ist als derjenige, welcher zur maximalen Komprimation führen würde, so dass die tatsächliche Dicke D_{MK} des komprimierten Materials M in der Faltrille FR größer ist als die Dicke D_{MKmax} bei maximal möglicher Komprimation. Dies wird durch Fig. 2a veranschaulicht.

Im Hinblick auf eine gute Schneidwirkung ist es des Weiteren von Vorteil, wenn der Öffnungswinkel µ (siehe Fig. 2) der Flanken, die an der Schneidkante 8 zusammenlaufen, im Bereich von 15° bis 100°, zum Beispiel 30° bis 70°, vorzugsweise bei 54°, liegt.

Die stumpfe Prägekante 6 ist in bevorzugter Ausbildung als ebene Fläche ausgebildet, die wie die Ansätze 7 beispielsweise durch Schleifen, Fräsen, chemisches Abtragen (Ätzung), Lasern oder Erodieren aus einem ursprünglichen Rohling für den Basiskörper 2 herstellbar ist (siehe insbesondere Fig. 2, Fig. 6, Fig. 10, Fig. 18 und Fig. 19). Dabei kann die Prägekante 6 bevorzugt entsprechend einer gewünschten ununterbrochenen Faltrille über die Länge L des streifenförmigen Basiskörpers 2 durchgehend ausgebildet sein. Die Prägekante 6 kann bevorzugt, wie die Figuren der Zeichnung zeigen, in einer zur Ebene des Basiskörpers 1 senkrechten Ebene verlaufen. Eine solche "geradlinige" Ausführung wird zum Hubprägen im Flachbett-Verfahren verwendet, kann aber auch beim Rotationsprägeverfahren für "axiale", parallel zur Rotationsachse eines Prägezylinders verlaufende Rillen eingesetzt werden, ebenso 90° zum Zylinder versetzt, d. h. "radial". Alternativ könnte die Prägekante 6 jedoch auch konvex (siehe Fig. 17, Fig. 20, Fig. 21) oder konkav (siehe Fig. 16) ausgebildet sein.

Die Schneidkanten 8 können stattdessen über die Länge L des streifenförmigen Basiskörpers 2 Unterbrechungen 11 aufweisen. Auf diese Weise kann in dem zu prägenden Gut eine "Ritzperforation" erzeugt werden. Dies ist insbesondere dann von Vorteil, wenn es sich bei dem zu prägenden Material um sehr dünnes oder weniger festes Material handelt, das bei entsprechendem Prägedruck unter Umständen bereichsweise ganz durchtrennt werden könnte. Die Unterbrechungen 11 können in den beiden parallel zu einander verlaufenden Schneidkanten 8 einander diametral gegenüberliegend oder versetzt zueinander - symmetrisch oder asymmetrisch - angeordnet sein. Hierbei sind verschiedene Verhältnisse für die Länge der Unterbrechungen 11 zu den nicht unterbrochenen Bereichen der Schneidkante 8 möglich, z. B. im Bereich von 1 : 5 bis 1 :10. Des Weiteren kann in den beiden Schneiden 8 die Teilung über die Schneidenlänge L mit regelmäßiger oder unregelmäßiger Beabstandung der Unterbrechungen 11 voneinander ausgeführt sein.

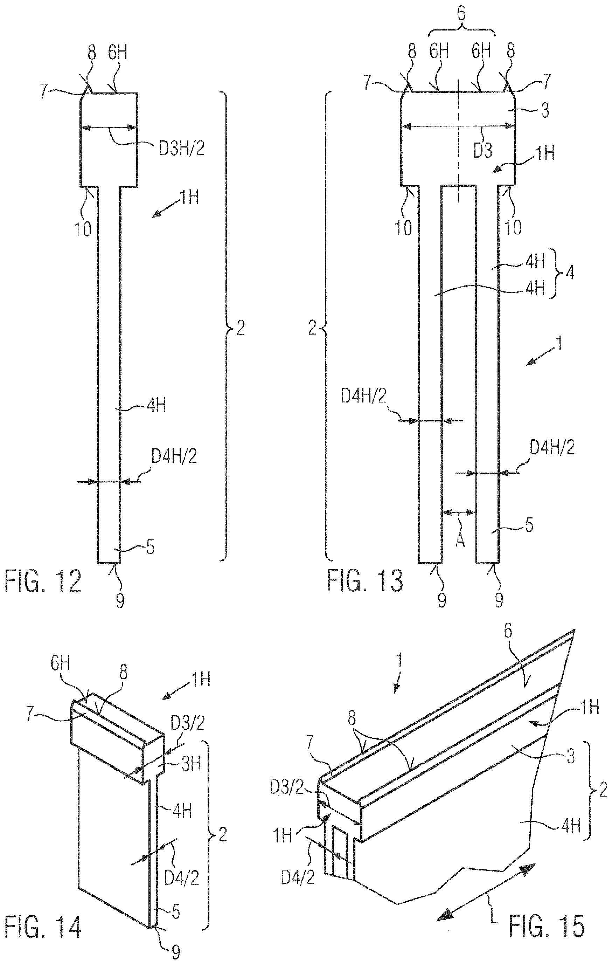

Neben der in Fig. 1 bis Fig. 4 gezeigten Ausbildung des Basiskörpers 2 ist auch eine Ausbildung möglich, bei der dieser zumindest zweiteilig ausgebildet ist. Auf eine derartige Ausbildung beziehen sich die in Fig. 5 bis Fig. 11 dargestellte zweite Ausführung und die in Fig. 12 bis Fig. 15 dargestellte dritte Ausführung der Erfindung. Insbesondere besteht der Basiskörper 2 in diesen weiteren Ausführungen jeweils aus zwei symmetrisch zueinander ausgebildeten Werkzeughälften 1H, die stoffschlüssig, also beispielsweise durch Schweißen, Löten, Kleben usw., miteinander verbunden sein können. Die Werkzeughälften 1H können zum Zusammenfügen bevorzugt aber auch nur aneinander gelegt werden, wobei sie dann nach dem Einsetzen in den Aufnahmeschlitz ES des Werkzeugträgers WT, dadurch dass der Aufnahmeschlitz ES für eine Presspassung dimensioniert ist, dort geklemmt werden. Sie werden dann also kraftschlüssig aneinander und im Aufnahmeschlitz ES gehalten.

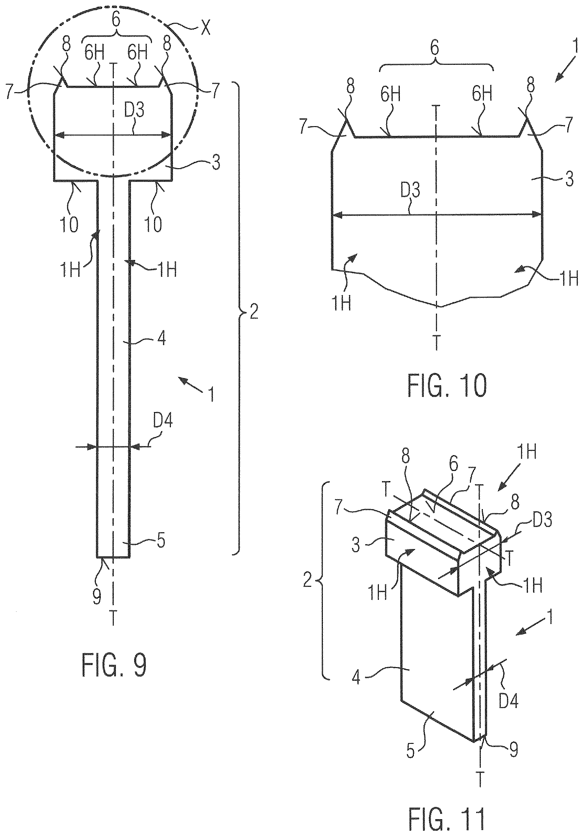

Aus jeweils zwei komplementären Werkzeughälften, 1H bzw. Basiskörperhälften, wie sie in Fig. 5 bis 8 dargestellt sind, entsteht durch die gegenseitige Verbindung oder das Aneinanderlegen jeweils ein Basiskörper 2, wie er in Fig. 9 bis Fig. 11 dargestellt ist. Die Linien T-T in Fig. 9 bis Fig. 11 stellen dabei einerseits die Mittenebene, aber andererseits vor allem die Verbindungsebene der Werkzeughälften 1H dar. Durch das Zusammenfügen der Werkzeughälften 1H entsteht aus den jeweils halben Kopfbereichen 3H mit den halben Prägekanten 6H und den jeweils halben Klingenbereichen 4H dabei der Basiskörper 2 als Ganzes, wobei sich jeweils die halben Dicken D3H, D4H von Kopfbereich und Klingenbereich 4 zu den (Gesamt-)Dicken D3, D4 vereinigen.

Die zweite Ausführung der Erfindung (Fig. 5 bis Fig. 8) und die dritte Ausführung der Erfindung (Fig. 12 bis Fig. 15) unterscheiden sich dabei dadurch, dass die Klingenbereichhälfte 4H in der zweiten Ausführung in der Werkzeughälfte 1H asymmetrisch, also am Rand der Kopfbereichhälfte 3H, angeordnet ist, während die Klingenbereichhälfte 4H in der dritten Ausführung in der Werkzeughälfte 1H symmetrisch, also in der Mitte der Kopfbereichhälfte 3H angeordnet ist.

Die symmetrische Anordnung der Klingenbereichhälfte 4H in der Werkzeughälfte 1H der dritten Ausführung führt dazu, dass im Basiskörper 2 die Klingenbereichhälften 4H, nicht - wie in der zweiten Ausführung - aneinander anliegen und miteinander verbunden sind, sondern dass ein Abstand A (siehe Fig. 13) zwischen ihnen besteht. Durch diesen Beabstandung A können die Klingenbereichhälften 4H Federbeine bilden, welche es vorteilhafterweise - bei entsprechend abgestimmter Dimensionierung eines Einsatzschlitzes ES (Fig. 1) des Werkzeugträgers WT auf die Gesamtbreite des Klingenbereiches 4 (2 ^{∗} D4/2 + A) - gestatten, den Basiskörper 2 zusätzlich kraftschlüssig in Werkzeugträger WT zu verklemmen.

Abschließend sollen noch einige bevorzugte Maße für das erfindungsgemäße Präge- und Schneidwerkzeug 1 beispielhaft angegeben werden.

Der Basiskörper 2 kann eine Gesamthöhe H (nur in Fig. 1 eingezeichnet) im Bereich von 15 mm bis 100 mm, bevorzugt von 20 mm bis 25 mm, insbesondere 23,8 mm, sowie eine Dicke D4 im Klingenbereich 4 von 0,4 mm bis 2,1 mm aufweisen. Der gehärtete Ansatz 7 kann bevorzugt um eine Höhe von bis zu 1 mm gegenüber der Prägekante 6 vorstehen.

Was die Schneidbereiche 7 betrifft, so sind zur Bildung der darin liegenden jeweiligen Schneidkante 8 grundsätzlich beliebige Ausführungsformen möglich. In den dargestellten Ausführungsbeispielen weist der jeweilige Schneidbereich 7 zur Bildung seiner Schneidkante 8 zu einer nicht dargestellten Längsmittelebene des Schneidbereichs 7 symmetrische Fasen auf. Diese können - wie dargestellt - als einfache Fasen oder auch als Facetten mit zwei Doppelfasen ausgebildet sein. Auch können die Fasen nur über einen Teilbereich der Höhe des Schneidbereiches 7 verlaufen oder über seine gesamte Höhe. Schließlich kann die Schneidkante 8 auch mit einem Radius versehen sein.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. So könnte z. B. auch vorgesehen sein, dass der Basiskörper 2 in der einstückigen Ausführung oder in der zweistückigen Ausführung die Werkzeughälften 1H selbst jeweils nochmals zweiteilig ausgebildet sind. Aus der zweiteiligen Ausführung des Basiskörper 2 entsteht also eine vierteilige Ausführung, wobei optional zusätzliche Trennebenen bzw. Verbindungsebenen T-T zwischen Kopfbereich 3 und Klingenbereich 4 bzw. zwischen den jeweiligen Kopfbereichhälften 3H und Klingenbereichhälften 4H vorgesehen werden können. Auch hier kann die Verbindung jeweils stoffschlüssig erfolgen. Eine derartige Ausführung kann unter fertigungstechnischen Aspekten vorteilhaft sein, weil trotz des notwendigen zusätzlichen Verfahrensschrittes des Zusammenfügens der Einzelteile aber durch die jeweils uniform mögliche Behandlung der Einzelteile und dann einen möglichen Verzicht auf eine spanende Bearbeitung, um den Dickenunterschied D3-D4 von Kopfbereich 3 und Klingenbereich 4 herzustellen, die Gesamtfertigung dennoch weniger Aufwand erfordert, also wirtschaftlicher wird.

Auch könnte der Kopfbereich 3 im Querschnitt beispielsweise asymmetrisch ausgebildet sein, insbesondere im Hinblick auf die Form und/oder die Höhen H7 seiner Ansätze 7 gegenüber der stumpfen Prägekante 6.

Wenn die durch das zu bearbeitende Gut zu erwartende Verschleißbeanspruchung des erfindungsgemäßen Werkzeugs 1 nur gering oder moderat ist, kann unter Umständen auch auf eine Härtebehandlung gänzlich verzichtet werden und stattdessen ein kaltumgeformtes Stahlband für den Basiskörper 2 eingesetzt werden.

Wenn anmeldungsgemäß der Ausdruck "Schneidkante 8" verwendet wird, so ist doch - je nach ihrer möglichen Ausführung - von einem optional unterschiedlichen Verhalten beim "Schneiden"auszugehen. So bestimmt die Eindringtiefe der Schneidkanten 8 in das Gut die Stärke der Ritzwirkung. Wenn die Schneidkanten 8 oberseitig verrundet sind (siehe Fig. 21), liegt auch dort-wie im Bereich der Prägekante 6 - je nach der Größe des Verrundungsradius eine mehr oder weniger prägende, sogar bis zu einer ausschließlich stauchenden, Wirkung vor. Das zu rillende Gut wird jedoch durch verrundete Schneidkanten 8 jedenfalls stärker gestaucht bzw. komprimiert als im Angriffsbereich der Prägekante 6. Dies kann bereits ausreichend sein, um die gewünschte Optimierung des Kräfteverlaufs im Gut zu bewirken. Die Schneidkante 8 könnte daher auch als "Schneid-, Ritz- und/oder Stauchkante 8" bezeichnet werden.

Insofern wird in allgemeiner Form gemäß dem Anspruch 12 auch einem Werkzeug 1 zum zumindest Prägen von linienförmigen Faltrillen von faltbaren Materialien, wie Pappe, Kartonagen, Feinkartonagen, Kunststoff-Folien oder Wellpappe erfinderische Bedeutung beigemessen, bestehend aus einem flachen, streifenförmigen Basiskörper 2, wobei der Basiskörper 2 einen Kopfbereich 3 aufweist, in dem an einer Längskante zumindest eine stumpfe Prägekante 6 zur Erzeugung einer Faltrille im Material ausgebildet ist, und wobei der Basiskörper 2 einen Klingenbereich 4 mit einem Fußbereich 5 aufweist, in dem an einer dem Kopfbereich 3 gegenüberliegenden Längskante ein Rücken 9 zur Anlage in einem Werkzeugträger WT ausgebildet ist, wobei sich dieses Werkzeug 1 dadurch auszeichnet, dass der Kopfbereich 3 des Basiskörpers 2 breiter ausgebildet ist als sein Klingenbereich 4, wobei im Kopfbereich 3 zwei Ansätze 7 mit parallel zueinander verlaufenden Schneid-, Ritz- und/oder Stauchkanten 8 angeordnet sind, zwischen denen sich die stumpfe Prägekante 6 befindet. Hierbei kann zumindest eine der parallel zueinander verlaufenden Schneid-, Ritz- und/oder Stauchkanten 8 oberseitig verrundet sein.

Gemäß der erfindungsgemäßen Verwendung des erfindungsgemäßen Werkzeugs 1 wird ein faltbares Material, wie Pappe, Karton, Feinkarton, Kunststoff-Folie oder Wellpappe, auf eine ebenflächige Unterlage gebracht und dann durch das Werkzeug 1 oberseitig mit einem, insbesondere senkrecht zur Unterlage wirkenden, Druck beaufschlagt, wobei mittels der stumpfen Prägekante 6 eine Faltrille erzeugt und mittels der an den beiden Ansätzen 7 befindlichen, parallel zueinander verlaufenden Schneid-, Ritz- und/oder Stauchkanten 8 ein Einschneiden, eine Ritzung und/oder eine Stauchung des Materials erfolgt.

Bedarfsweise kann die Verrundung - also unter Verzicht auf eine einschneidende Wirkung der Schneid-, Ritz- und/oder Stauchkanten 8 - auch an beiden Kanten 8 vorgesehen sein, wie dies Fig 21 exemplarisch zeigt.

Bei der erfindungsgemäßen Verwendung des erfindungsgemäßen Werkzeugs 1 sind verschiedene Alternativen möglich, So kann vorgesehen sein, dass die stumpfe Prägekante 6 vor oder nach den parallel zueinander verlaufenden Schneid-, Ritz- und/oder Stauchkanten 8 mit der Oberfläche des Materials in Berührung kommt, oder dass die stumpfe Prägekante 6 gleichzeitig mit den parallel zueinander verlaufenden Schneid-, Ritz- und/oder Stauchkanten 8 mit der Oberfläche des Materials in Berührung kommt.

Dass die stumpfe Prägekante 6 vor den parallel zueinander verlaufenden Schneid-, Ritz- und/oder Stauchkanten 8 mit der Oberfläche des Materials in Berührung kommt, setzt voraus, dass die stumpfe Prägekante 6 gegenüber den parallel zueinander verlaufenden Schneid-, Ritz- und/oder Stauchkanten 8 vorsteht, wie dies in Fig. 18 gezeigt ist.

Die teilweise vorstehend schon erwähnten Figuren 16 bis 21 veranschaulichen jeweils eine vierte, fünfte, sechste, siebte, achte und neunte Ausführungsform des erfindungsgemäßen Werkzeuges 1, insofern dieses aus zwei Werkzeughälften besteht, was durch die strichpunktierte Linie angedeutet ist, welche die Mittenebene kennzeichnet.
Hervorzuheben sind dabei in Fig. 16 die konkave stumpfe Prägekante 6 und in Fig 17 sowie 20 und 21 die konvexen stumpfen Prägekanten 6, die von den vorherigen Ausführungen abweichen.

Ferner sind in den sechs weiteren Ausführungen des jeweiligen Werkzeugs 1 unterschiedliche Höhen H7 des Ansatzes 7 zu sehen.
In Fig. 16, 17 und 19 sind diese Höhen H7 des Ansatzes 7 größer als Null. Im Anwendungsfall dieser Ausführungen ergibt sich im Material eine Tiefe der Ritzung die - abgesehen von einem eventuellen Betrag einer elastischen Rückfederung nach Beendigung der Einwirkung der Prägekante 6 - größer ist als die Tiefe der Faltrille. Diese Differenz sollte so abgestimmt sein, dass keine Durchtrennung erfolgt.

In Fig. 20 und 21 sind die Höhen H7 gleich Null, wobei unter der jeweiligen Höhe 7 immer der senkrechte Abstand des jeweils höchstliegenden Punktes der stumpfen Prägekante 6 zum höchstliegenden Punkt bzw. der höchstliegenden Linie der Schneid-, Ritz- und/oder Stauchkanten 8 verstanden wird. Im Anwendungsfall dieser Ausführungen ergibt sich im Material eine Tiefe der Ritzung, die - abgesehen von einem eventuellen Betrag einer elastischen Rückfederung nach Beendigung der Einwirkung der Prägekante 6 - etwa genauso groß ist wie die Tiefe der Faltrille.

Gemäß der vorstehenden Definition ist die Höhe H7 der Ansätze 7 bei der Ausführung nach Fig. 18 kleiner als Null, da nicht die Schneid-, Ritz- und/oder Stauchkante 8 gegenüber der stumpfen Prägekante 6 vorsteht, sondern umgekehrt die Prägekante 6 gegenüber der Schneid-, Ritz- und/oder Stauchkante 8. Eine solche Ausführung ist besonders gut geeignet zur Verwendung bei relativ dickem und stark komprimierbarem Material, wie z. B. Wellpappe, da die stumpfe Prägekante 6 - im Gegensatz zu den anderen Ausführungen - schon vor den parallel zueinander verlaufenden Schneid-, Ritz- und/oder Stauchkanten 8 mit der Oberfläche des Materials in Berührung kommt, so dass das Material erst dann geritzt wird, wenn es schon vorkomprimiert ist. Im Anwendungsfall dieser Ausführung ergibt sich im Material eine Tiefe der Ritzung, die - abgesehen von einem eventuellen Betrag einer elastischen Rückfederung nach Beendigung der Einwirkung der Prägekante 6 - kleiner ist als die Tiefe der Faltrille.

Zu Fig. 19 und 20 ist als Besonderheit hervorzuheben, dass bei diesen Ausführungen des jeweiligen erfindungsgemäßen Werkzeugs 1 jeweils zwischen der stumpfen Prägekante 6 und den parallel zueinander verlaufenden Schneid-, Ritz- und/oder Stauchkanten 8 eine Ausnehmung 12 vorgesehen ist, bei der es sich beispielsweise um eine Einkerbung wie in Fig. 19 oder um eine Nut wie in Fig. 20 handeln kann. Durch diese Ausnehmungen 12 wird das Prägeverhalten des Gutes weiter verbessert. An diesen Stellen kann sich beidseitig der Faltrille im Material ein Wulst bilden. Eine ähnliche Wirkung zeigen dabei auch die Vertiefungen 13 bei den Ausführungen gemäß Fig. 17, 18 und 21, die aufgrund der konvexen Form der stumpfen Prägekante 6 bzw. aufgrund des Vorstehens der Prägekante 6 gegenüber den Schneid-, Ritz- und/oder Stauchkanten 8 ausgebildet sind.

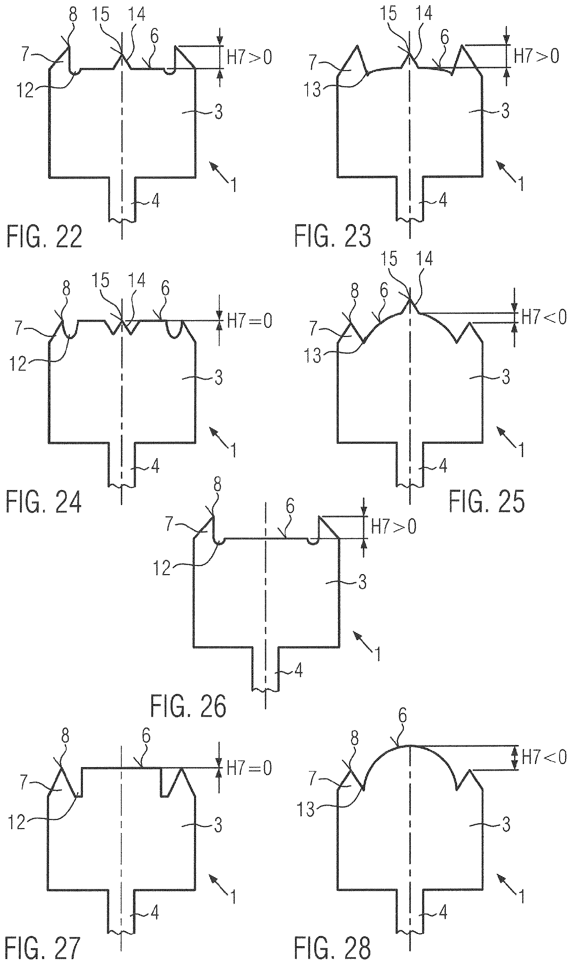

Bei den in Fig. 22 bis Fig. 28, insbesondere in Fig. 26 bis 28, gezeigten weiteren Ausführungsformen des erfindungsgemäßen Werkzeuges 1 - auch diese Ausführungen sind erfindungsgemäß, wenn der Basiskörper 2 jeweils aus zwei symmetrisch zueinander ausgebildeten Werkzeughälften 1H mit jeweils einer Kopfbereichhälfte 3H und einer Klingenbereichhälfte 4H besteht - handelt es sich teilweise um solche, bei denen die bereits erläuterten, optional vorhandenen Merkmale, wie konvexe oder plane Prägekante 6, unterschiedliche Höhen H7 der Ansätze 7 mit den Schneid-, Ritz- und/oder Stauchkanten 8 sowie die Präsenz von Ausnehmungen 12, wie Nuten oder Einkerbungen, bzw. von Vertiefungen 13 auf verschiedenartige Weise kombiniert sind und die daher keiner weiteren speziellen Erläuterung bedürfen.

Zu den Fig. 22 bis 25 ist erläuternd hinzuzufügen, dass die darin dargestellten Ausführungen des erfindungsgemäßen Werkzeugs 1 ein weiteres vorteilhaftes optionales Merkmal aufweisen, nämlich, dass im Bereich der stumpfen Prägekante 6, insbesondere mittig, mindestens ein weiterer Ansatz 14 mit einer Schneid-, Ritz- und/oder Stauchkante 15 ausgebildet ist, die parallel zu den Schneid-, Ritz- und/oder Stauchkanten 8 verläuft, welche beidseitig der Prägekante 6 angeordnet sind. Hierdurch wird eine weitere Vergleichmäßigung der inneren Spannungen im Material erreicht, wenn dieses geprägt wird.

Wie durch die strichpunktierten Mittenlinien in Fig. 16 bis Fig. 28 angedeutet ist, kann auch bei diesen Beispielen eine Ausführung mit separaten Kopfbereichshälften 3H und Klingenbereichshälften 4H und eine anschließende Zusammenfügung derselben vorgesehen sein, wie dies beispielsweise anhand der Fig. 5 bis 8 bzw. auch Fig. 12 bis 15 erläutert wurde. An jeder Klingenbereichhälfte 4H könnte sich dann jeweils ein halber zusammenlegbarer Fußbereich (wie in Fig. 5 bis 8) oder ein eigenes Federbein befinden, das von einem Federbein in der anderen Werkzeughälfte 1H beabstandet ist (wie in Fig. 12 bis 15).

Es hat sich durch Vergleichsuntersuchungen bestätigt, dass die Qualität der Faltrillen von gefalteten Materialien, wie Pappe, Kartonagen, Feinkartonagen, Kunststoff-Folien oder Wellpappe, insbesondere im oberen Bereich der o. g. spezifischen Flächengewichte durch die Erfindung signifikant hochwertiger gestaltet werden kann.

## Patentansprüche

1. Werkzeug (1) zum zumindest Prägen von linienförmigen Faltrillen und zum Einschneiden von faltbaren Materialien, wie Pappe, Kartonagen, Feinkartonagen, Kunststoff-Folien oder Wellpappe, bestehend aus einem flachen, streifenförmigen Basiskörper (2), wobei der Basiskörper (2) einen Kopfbereich (3) aufweist, in dem an einer Längskante zumindest eine stumpfe Prägekante (6) zur Erzeugung einer Faltrille im Material ausgebildet ist, und wobei der Basiskörper (2) einen Klingenbereich (4) mit einem Fußbereich (5) aufweist, in dem an einer dem Kopfbereich (3) gegenüberliegenden Längskante ein Rücken (9) zur Anlage in einem Werkzeugträger (WT) ausgebildet ist, wobei der Kopfbereich (3) des Basiskörpers (2) breiter ausgebildet ist als sein Klingenbereich (4), wobei im Kopfbereich (3) zwei Ansätze (7) mit parallel zueinander verlaufenden Schneid-, Ritz- und/oder Stauchkanten (8) angeordnet sind, zwischen denen sich die stumpfe Prägekante (6) befindet, wobei der Basiskörper (2) zumindest zweiteilig ausgebildet ist,
**dadurch gekennzeichnet, dass** der Basiskörper (2) jeweils aus zwei symmetrisch zueinander ausgebildeten Werkzeughälften (1H) mit jeweils einer Kopfbereichhälfte (3H) und einer Klingenbereichhälfte (4H) besteht.

2. Werkzeug (1) nach Anspruch 1
**dadurch gekennzeichnet, dass** im Kopfbereich (3) zwei Ansätze (7) mit parallel zueinander verlaufenden Schneidkanten (8) angeordnet sind, zwischen denen sich die stumpfe Prägekante (6) befindet.

3. Werkzeug (1) nach Anspruch 1 oder 2,
**dadurch gekennzeichnet, dass** die stumpfe Prägekante (6) als ebene Fläche, konkav oder konvex und vorzugsweise über die Länge (L) des streifenförmigen Basiskörpers (2) durchgehend ausgebildet ist.

4. Werkzeug (1) nach einem der Ansprüche 1 bis 3,
**dadurch gekennzeichnet, dass** die Schneidkanten (8) über die Länge (L) des streifenförmigen Basiskörpers (2) Unterbrechungen (11) aufweisen, wobei die Unterbrechungen (11) in den beiden parallel zueinander verlaufenden Schneidkanten (8) einander diametral gegenüberliegend oder versetzt zueinander angeordnet sind, wobei die Schneidkanten (8) symmetrisch oder asymmetrisch zueinander ausgebildet sind, und wobei die Unterbrechungen (11) in regelmäßiger oder unregelmäßiger Folge über die Länge (L) angeordnet sind.

5. Werkzeug (1) nach einem der Ansprüche 1 bis 4,
**dadurch gekennzeichnet, dass** die Klingenbereichhälften (4H) stoffschlüssig, beispielsweise durch Schweißen, Löten, Kleben usw., odervorzugsweise in einem Werkzeugträger (WT) - kraftschlüssig miteinander verbunden sind.

6. Werkzeug (1) nach einem der Ansprüche 1 bis 5,
**dadurch gekennzeichnet, dass** die Klingenbereichhälfte (4H) in der Werkzeughälfte (1H) asymmetrisch, also am Rand der Kopfbereichhälfte (3H), oder symmetrisch, also in der Mitte der Kopfbereichhälfte (3H) angeordnet ist, wobei bei symmetrischer Anordnung der Klingenbereichhälften (4H) in den Werkzeughälften (1H) im Basiskörper (2) ein Abstand (A) zwischen den Klingenbereichhälften (4H) besteht, und wobei bei asymmetrischer Anordnung der Klingenbereichhälften (4H) in den Werkzeughälften (1H) die Klingenbereichhälften (4H) im Basiskörper (2) aneinander anliegen und vorzugsweise miteinander verbunden sind.

7. Werkzeug (1) nach einem der Ansprüche 1 bis 6,
**dadurch gekennzeichnet, dass** im Basiskörper (2) die Kopfbereichhälfte (3H) und die Klingenbereichhälfte (4H) jeweils als getrennte, jedoch miteinander stoffschlüssig verbundene Teile ausgebildet sind.

8. Werkzeug (1) nach einem der Ansprüche 1 bis 6,
**dadurch gekennzeichnet, dass** der Klingenbereich (4) eine Dicke (D4) aufweist, die im Bereich von 25 % bis 75 % einer Dicke (D3) des Kopfbereiches (3) liegt.

9. Werkzeug (1) nach einem der Ansprüche 1 bis 8,
**dadurch gekennzeichnet, dass** der Kopfbereich (3), bevorzugt nur dessen Ansatz (7), zumindest aber der Ansatz (7) im Bereich der Schneidkante (8), gehärtet und angelassen ist, wobei insbesondere die Härte des Ansatzes (7), zumindest im Bereich der Schneidkante (8) mindestens 50 HRC beträgt, während der Basiskörper (2) im Klingenbereich (4) bevorzugt eine Grundhärte von 25 HRC bis 45 HRC aufweist.

10. Werkzeug (1) nach einem der Ansprüche 1 bis 7,
**dadurch gekennzeichnet, dass** der gesamte Basiskörper (2) gehärtet und angelassen ist, so dass der Kopfbereich (3) mit dem Ansatz (7) und der Klingenbereich (4) die gleiche Härte aufweisen.

11. Werkzeug (1) nach einem der Ansprüche 1 bis 10,
**dadurch gekennzeichnet, dass** zumindest eine, vorzugsweise beide, der parallel zueinander verlaufenden Schneid-, Ritz- und/oder Stauchkanten (8) oberseitig verrundet ist/sind.

12. Werkzeug (1) nach einem der Ansprüche 1 bis 11,
**dadurch gekennzeichnet, dass** jeweils zwischen der stumpfen Prägekante (6) und den parallel zueinander verlaufenden Schneid-, Ritz- und/oder Stauchkanten (8) eine Ausnehmung (12), wie eine Nut oder eine Einkerbung, oder eine Vertiefung (13) ausgebildet ist.

13. Werkzeug (1) nach einem der Ansprüche 1 bis 12,
**dadurch gekennzeichnet, dass** eine Höhe (H7) des Ansatzes (7) gegenüber der stumpfen Prägekante (6) - definiert als der senkrechte Abstand des jeweils höchstliegenden Punktes der stumpfen Prägekante (6) zum höchstliegenden Punkt bzw. der höchstliegenden Linie der Schneid-, Ritz- und/oder Stauchkanten (8) - größer, kleiner oder gleich Null ist.

14. Werkzeug (1) nach einem der Ansprüche 1 bis 13,
**dadurch gekennzeichnet, dass** der Kopfbereich (3) im Querschnitt asymmetrisch ausgebildet ist, insbesondere im Hinblick auf die Form und/oder die Höhen (H7) der Ansätze (7) gegenüber der stumpfen Prägekante (6).

15. Werkzeug (1) nach einem der Ansprüche 1 bis 14,
**dadurch gekennzeichnet, dass** im Bereich der stumpfen Prägekante (6), insbesondere mittig, mindestens ein weiterer Ansatz (14) mit einer Schneid-, Ritz- und/oder Stauchkante (15) ausgebildet ist, die parallel zu den Schneid-, Ritz- und/oder Stauchkanten (8) verläuft, die beidseitig der Prägekante (6) angeordnet sind.

## Claims

1. Tool (1) for at least embossing linear fold creases and for cutting foldable materials, such as paperboard, cardboards, fine cardboards, plastic films or corrugated paperboard, consisting of a flat, strip-shaped basic body (2), wherein the basic body (2) has a head region (3) in which at least one blunt embossing edge (6) for producing a fold crease in the material is configured at a longitudinal edge, and wherein the basic body (2) has a blade region (4) having a foot region (5) in which a back (9), which is intended for abutment in a tool carrier (WT), is configured at a longitudinal edge which lies opposite the head region (3), wherein the head region (3) of the basic body (2) is configured to be wider than the blade region (4) thereof, wherein two shoulders (7) which have cutting, scoring and/or upsetting edges (8) extending parallel to each other and between which the blunt embossing edge (6) is located are arranged in the head region (3), wherein the basic body (2) is configured at least in two parts, **characterized in that** the basic body (2) in each case consists of two tool halves (1H) which are configured to be symmetrical with respect to each other and which each have a head region half (3H) and a blade region half (4H).

2. Tool (1) according to Claim 1,
**characterized in that** two shoulders (7) which have cutting edges (8) extending parallel to each other and between which the blunt embossing edge (6) is located are arranged in the head region (3).

3. Tool (1) according to Claim 1 or 2,
**characterized in that** the blunt embossing edge (6) is configured as a flat surface or is of concave or convex configuration and preferably is configured to be continuous over the length (L) of the strip-shaped basic body (2) .

4. Tool (1) according to one of Claims 1 to 3,
**characterized in that** the cutting edges (8) have interruptions (11) over the length (L) of the strip-shaped basic body (2), wherein the interruptions (11) in the two cutting edges (8) extending parallel to each other are arranged diametrically opposite each other or offset with respect to each other, wherein the cutting edges (8) are configured to be symmetrical or asymmetrical with respect to each other, and wherein the interruptions (11) are arranged in a regular or irregular sequence over the length (L).

5. Tool (1) according to one of Claims 1 to 4,
**characterized in that** the blade region halves (4H) are connected in a materially bonded manner, for example by welding, soldering, adhesive bonding, etc., or - preferably in a tool carrier (WT) - are connected to one another in a force-fitting manner.

6. Tool (1) according to one of Claims 1 to 5,
**characterized in that** the blade region half (4H) is arranged asymmetrically, that is to say at the edge of the head region half (3H), or symmetrically, that is to say in the middle of the head region half (3H), in the tool half (1H), wherein, if the blade region halves (4H) are arranged symmetrically in the tool halves (1H), there is a distance (A) between the blade region halves (4H) in the basic body (2), and wherein, if the blade region halves (4H) are arranged asymmetrically in the tool halves (1H), the blade region halves (4H) abut against each other, and are preferably connected to one another, in the basic body (2).

7. Tool (1) according to one of Claims 1 to 6,
**characterized in that**, in the basic body (2), the head region half (3H) and the blade region half (4H) are each configured as separate parts but are connected to one another in a materially bonded manner.

8. Tool (1) according to one of Claims 1 to 6,
**characterized in that** the blade region (4) has a thickness (D4) which lies in the range of 25% to 75% of a thickness (D3) of the head region (3).

9. Tool (1) according to one of Claims 1 to 8,
**characterized in that** the head region (3), preferably only the shoulder (7) thereof, but at least the shoulder (7) in the region of the cutting edge (8), is hardened and annealed, wherein in particular the hardness of the shoulder (7), at least in the region of the cutting edge (8), is at least 50 HRC, while the basic body (2), in the blade region (4), preferably has a base hardness of 25 HRC to 45 HRC.

10. Tool (1) according to one of Claims 1 to 7,
**characterized in that** the entire basic body (2) is hardened and annealed, such that the head region (3), with the shoulder (7), and the blade region (4) have the same hardness.

11. Tool (1) according to one of Claims 1 to 10,
**characterized in that** at least one, preferably both, of the cutting, scoring and/or upsetting edges (8) extending parallel to each other is/are rounded on the top side.

12. Tool (1) according to one of Claims 1 to 11,
**characterized in that** there is in each case a cutout (12), such as a groove or a notch, or a recess (13) configured between the blunt embossing edge (6) and the cutting, scoring and/or upsetting edges (8) extending parallel to each other.

13. Tool (1) according to one of Claims 1 to 12,
**characterized in that** a height (H7) of the shoulder (7) in relation to the blunt embossing edge (6) - defined as the perpendicular distance of the respectively highest point of the blunt embossing edge (6) to the highest point or the highest line of the cutting, scoring and/or upsetting edges (8) - is greater than, smaller than or equal to zero.

14. Tool (1) according to one of Claims 1 to 13,
**characterized in that** the head region (3) is of asymmetrical configuration in cross section, in particular with regard to the shape and/or the heights (H7) of the shoulders (7) in relation to the blunt embossing edge (6).

15. Tool (1) according to one of Claims 1 to 14,
**characterized in that**, in the region of the blunt embossing edge (6), in particular in the middle thereof, there is configured at least one further shoulder (14) having a cutting, scoring and/or upsetting edge (15) which extends parallel to the cutting, scoring and/or upsetting edges (8) which are arranged on both sides of the embossing edge (6).

## Revendications

1. Outil (1) destiné au moins au rainage de rainures de pliage linéaires et pour l'entaillage de matériaux pliables tels que du carton, des cartonnages, des cartonnages fins, des feuilles de plastique ou du carton ondulé, constitué d'un corps de base plat (2) en forme de bande, le corps de base (2) présentant une région de tête (3) dans laquelle au moins une arête de rainage émoussée (6) est réalisée au niveau d'une arête longitudinale pour produire une rainure de pliage dans le matériau, et le corps de base (2) présentant une région de lame (4) avec une région de base (5) dans laquelle est réalisé un dos (9) au niveau d'une arête longitudinale opposée à la région de tête (3), pour l'appui contre un support d'outil (WT), la région de tête (3) du corps de base (2) étant réalisée de manière à être plus large que sa région de lame (4), dans la région de tête (3) étant disposées deux saillies (7) ayant des arêtes de coupe, d'entaillage et/ou d'écrasement (8) s'étendant parallèlement l'une à l'autre, entre lesquelles se trouve l'arête de rainage émoussée (6), le corps de base (2) étant réalisé au moins en deux parties,
**caractérisé en ce que** le corps de base (2) se compose à chaque fois de deux moitiés d'outil (1H) réalisées de manière symétrique l'une par rapport à l'autre avec à chaque fois une moitié de région de tête (3H) et une moitié de région de lame (4H).

2. Outil (1) selon la revendication 1,
**caractérisé en ce que** dans la région de tête (3) sont disposées deux saillies (7) ayant des arêtes de coupe (8) s'étendant parallèlement l'une à l'autre, entre lesquelles se trouve l'arête de rainage émoussée (6).

3. Outil (1) selon la revendication 1 ou 2,
**caractérisé en ce que** l'arête de rainage émoussée (6) est réalisée sous forme de surface plane, s'étendant en continu sous forme concave ou convexe et de préférence sur la longueur (L) du corps de base (2) en forme de bande.

4. Outil (1) selon l'une quelconque des revendications 1 à 3,
**caractérisé en ce que** les arêtes de coupe (8) présentent sur la longueur (L) du corps de base (2) en forme de bande des interruptions (11), les interruptions (11) étant disposées de manière décalée les unes par rapport aux autres ou de manière diamétralement opposée les unes aux autres dans les deux arêtes de coupe (8) s'étendant parallèlement l'une à l'autre, les arêtes de coupe (8) étant réalisées symétriquement ou asymétriquement les unes par rapport aux autres et les interruptions (11) étant disposées en succession régulière ou irrégulière sur la longueur (L).

5. Outil (1) selon l'une quelconque des revendications 1 à 4,
**caractérisé en ce que** les moitiés de région de lame (4H) sont connectées les unes aux autres par liaison de matière, par exemple par soudage, brasage, collage etc., ou par engagement par force, de préférence dans un support d'outil (WT).

6. Outil (1) selon l'une quelconque des revendications 1 à 5,
**caractérisé en ce que** la moitié de région de lame (4H) est disposée dans la moitié d'outil (1H) de manière asymétrique, c'est-à-dire au niveau du bord de la moitié de région de tête (3H), ou de manière symétrique, c'est-à-dire au milieu de la moitié de région de tête (3H), une distance (A) existant entre les moitiés de région de lame (4H) dans le cas d'un agencement symétrique des moitiés de région de lame (4H) dans les moitiés d'outil (1H) dans le corps de base (2), et dans le cas d'un agencement asymétrique des moitiés de région de lame (4H) dans les moitiés d'outil (1H), les moitiés de région de lame (4H) s'appliquant l'une contre l'autre dans le corps de base (2) et étant de préférence connectées l'une à l'autre.

7. Outil (1) selon l'une quelconque des revendications 1 à 6,
**caractérisé en ce que** la moitié de région de tête (3H) et la moitié de région de lame (4H) sont à chaque fois réalisées dans le corps de base (2) sous forme de pièces séparées mais connectées l'une à l'autre par liaison de matière.

8. Outil (1) selon l'une quelconque des revendications 1 à 6,
**caractérisé en ce que** la région de lame (4) présente une épaisseur (D4) qui est située dans une plage de 25 % à 75 % d'une épaisseur (D3) de la région de tête (3).

9. Outil (1) selon l'une quelconque des revendications 1 à 8,
**caractérisé en ce que** la région de tête (3), de préférence seulement sa saillie (7), mais au moins la saillie (7) dans la région de l'arête de coupe (8), est trempée et recuite, la dureté de la saillie (7), au moins dans la région de l'arête de coupe (8) valant notamment au moins 50 HRC, tandis que le corps de base (2) présente, dans la région de lame (4), de préférence une dureté de base de 25 HRC à 45 HRC.

10. Outil (1) selon l'une quelconque des revendications 1 à 7,
**caractérisé en ce que** le corps de base (2) dans son ensemble est trempé et recuit de telle sorte que la région de tête (3) avec la saillie (7) et la région de lame (4) présentent la même dureté.

11. Outil (1) selon l'une quelconque des revendications 1 à 10,
**caractérisé en ce qu'**au moins une, de préférence deux, des arêtes de coupe, d'entaillage et/ou d'écrasement (8) s'étendant parallèlement l'une à l'autre est/sont arrondies du côté supérieur.

12. Outil (1) selon l'une quelconque des revendications 1 à 11,
**caractérisé en ce qu'**à chaque fois entre l'arête de rainage émoussée (6) et les arêtes de coupe, d'entaillage et/ou d'écrasement (8) s'étendant parallèlement les unes aux autres est réalisé un évidement (12) tel qu'une rainure ou une entaille ou un renfoncement (13).

13. Outil (1) selon l'une quelconque des revendications 1 à 12,
**caractérisé en ce qu'**une hauteur (H7) de la saillie (7) est supérieure, inférieure ou égale à zéro par rapport à l'arête de rainage émoussée (6), définie comme la distance perpendiculaire du point respectif le plus haut de l'arête de rainage émoussée (6) par rapport au point le plus haut ou à la ligne la plus haute des arêtes de coupe, d'entaillage et/ou d'écrasement (8).

14. Outil (1) selon l'une quelconque des revendications 1 à 13,
**caractérisé en ce que** la région de tête (3) est réalisée de manière asymétrique en section transversale, en particulier en ce qui concerne la forme et/ou les hauteurs (H7) des saillies (7) par rapport à l'arête de rainage émoussée (6).

15. Outil (1) selon l'une quelconque des revendications 1 à 14,
**caractérisé en ce que** dans la région de l'arête de rainage émoussée (6), en particulier au centre, est réalisée au moins une saillie supplémentaire (14) avec une arête de coupe, d'entaillage et/ou d'écrasement (15) qui s'étend parallèlement aux arêtes de coupe, d'entaillage et/ou d'écrasement (8) qui sont disposées des deux côtés de l'arête de rainage (6).
